# EUROPEAN PATENT APPLICATION

(11) **EP 1 800 739 A1**
(43) Date of publication of application: **27.06.2007**
(21) Application number: 05028314.2
(22) Date of filing: 23.12.2005
(51) Int. Cl.: B01J 8/02

(54) **Method for controlling the temperature of exothermic chemical reactions**

(71) Applicant: METHANOL CASALE S.A., 6900 Lugano-Besso (CH)
(72) Inventor: Filippi, Ermanno, CH-6976 Castagnola (CH); Rizzi, Enrico, 22070 Casnate con Bernate (CO) (CH); Tarozzo, Mirco, CH-6853 Ligornetto (CH); Badano, Marco, CH-6900 Lugano-Besso (CH)
(74) Representative: Zardi, Marco

(57) **Abstract**

A method for controlling the temperature of an exothermic reaction with simultaneous production of steam is: based on the use of heat exchangers (5a) crossed by a recirculation liquid along an inner path extended between the inlet opening for the recirculation liquid and an outlet opening (5f), the recirculation liquid coming from a steam drum (10) for the separation of the produced steam and being fed to said inlet opening along a path external to the heat exchangers, the produced steam being integrated in the form of an additional liquid flow which is mixed at least in part with the recirculation liquid flowing along the external path.

## Description

### Field of application

In its most general aspect, the present invention relates to a method for conducting exothermic chemical reactions in pseudo-isothermal conditions.

By pseudo-isothermal conditions it is intended conditions for which the reaction temperature is controlled within a restricted range of values around a predetermined optimal value, or a predetermined temperature curve.

In particular, the invention refers to a method for controlling the reaction temperature of the aforesaid type, through the use of tube bundle or plate heat exchangers immersed in a catalytic bed in which such reaction takes place.

Still more in particular, the present invention refers to a method of the above considered type for the temperature control of an exothermic reaction and the simultaneous production of steam.

### Prior art

As it is known, the control of a catalytic reaction that it is intended to be carried out in pseudo-isothermal conditions is generally obtained through an exchange of heat between a predetermined operating fluid which flows within the heat exchangers and the catalytic bed in which such exchangers are immersed and in which the reaction takes place.

It is also known, in the case of exothermic or highly exothermic reactions, to use water as operating fluid to obtain, in addition to the desired heat exchange and control of the reaction temperature, a considerable production of steam. In such case, the operating fluid is boiling water.

In particular, the boiling water which crosses the heat exchangers absorbs a certain quantity of heat, generating steam. Upon leaving the heat exchangers, the steam is then separated from the boiling water in a steam drum and recovered so that it may be employed in various applications in the plant in which the exothermic reaction takes place.

The operating fluid is instead reintegrated by feeding a corresponding quantity of water into the same steam drum from which the steam was removed. The operating fluid is then recirculated to the heat exchangers as boiling water, to carry out its heat exchange operating fluid function.

This technique, although advantageous and widely applied in the field, has a recognized drawback due precisely to the fact that the temperature of the operating fluid entering into the heat exchangers is the boiling temperature of water.

For this reason the possibility of controlling the reaction temperature is very limited, the minimum attainable value of which is in any case higher than the boiling temperature of water.

### Summary of the invention

The technical problem underlying the present invention is that of providing a method for controlling the temperature of an exothermic reaction with simultaneous production of steam having functional characteristics such that the drawbacks previously mentioned with reference to the prior art are entirely overcome.

The aforesaid technical problem is solved, according to the invention, by a method of the above considered type based upon the use of heat exchangers crossed by a recirculation liquid along an inner path which extends between an inlet opening for the recirculation liquid and an outlet opening, said recirculation liquid coming from a steam drum for the separation of said produced steam and being fed to said inlet opening along a path external to said heat exchangers, said produced steam being reintegrated in the form of an additional liquid flow, characterized in that at least one part of said additional liquid flow is mixed with said recirculation liquid flowing along said external path.

By liquid, it is intended a heat exchange operating fluid which changes phase (vaporizes) when it absorbs the reaction heat.

Preferably, such liquid is water. In this case, particularly advantageous results were obtained with said at least one part of said additional liquid (water) flow comprised between 5 and 20 vol%, preferably 10 vol% based on the entire volume of said additional liquid (water) flow.

Still more preferably, all of said additional liquid flow is mixed with said recirculation liquid flowing along said external path.

Advantageously, said additional liquid flow has a lower temperature than the temperature of said recirculation liquid coming from said steam drum.

Preferably, the mixing between said recirculation liquid and said additional liquid flow occurs just upstream from said inlet opening for the recirculation liquid.

Also preferably, the aforesaid additional liquid flow is fed for being mixed with the recirculation liquid at a pressure higher than the pressure of the recirculation liquid.

Conveniently, the aforesaid exothermic reaction is a catalytic reaction carried out in a catalytic bed.

Advantageously, the aforesaid heat exchangers are of the so-called plate type.

Further advantages and characteristics of the method for controlling the temperature of exothermic reactions according to the present invention will be more evident from the detailed description of one embodiment thereof, made here below with reference to the attached drawings, given as indicative and not limiting.

### Brief description of the figures

Figure 1 shows, in longitudinal section, a schematic view of a reactor for carrying out the method according to the invention;

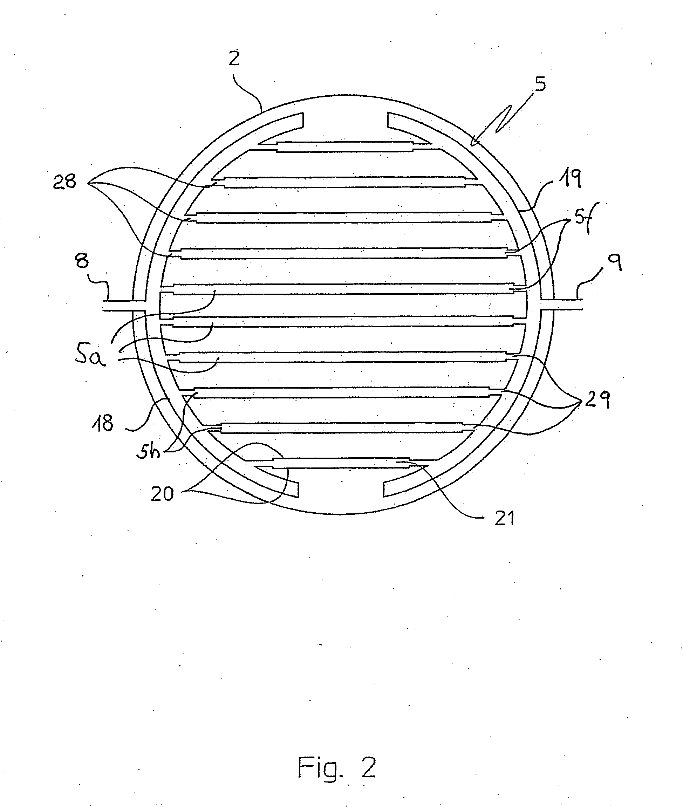

Figure 2 schematically shows the reactor of figure 1 in a cross-section view along the line I-I.
Figure 3 shows, in longitudinal section, a schematic view of the reactor of figure 1 according to an alternative embodiment of the method in accordance with the invention.

### Detailed description

With reference to the aforesaid figures, a reactor for carrying out the method according to the present invention is globally indicated with 1.

The reactor 1 comprises a cylindrical shell 2 having a vertical axis X-X, an upper bottom 3 equipped with a reagent inlet opening 3a, and a lower bottom 4 equipped with a product outlet opening 4a.

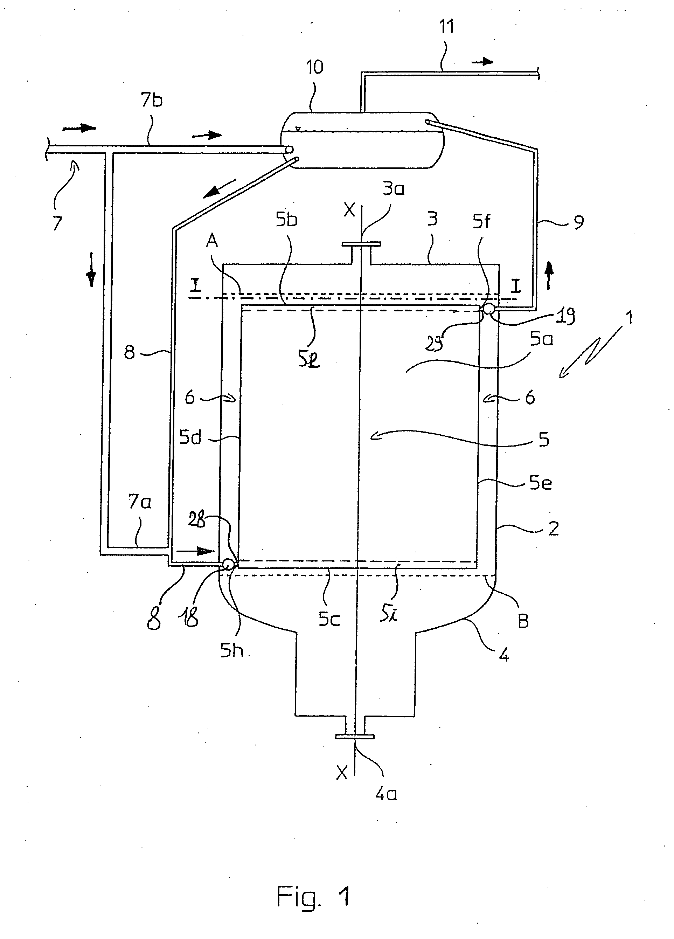

The reactor 1 moreover comprises a plurality 5 of plate heat exchangers 5a, positioned inside it and comprised in a reaction space defined between opposite horizontal planes, indicated in figure 1 with A and B.

In particular, such plate heat exchangers 5a are arranged on planes which are parallel to each other and parallel to the axis X-X of the cylindrical shell 2 of the reactor 1. The possibility is not excluded, however, of providing a radial arrangement of the heat exchangers with respect to the aforesaid axis X-X.

The reactor 1 also comprises a catalytic bed 6, supported within it in a known manner and thus not represented in the figures, defined between the horizontal planes A and B, in which the plurality 5 of heat exchangers 5a is immersed.

In detail, each heat exchanger 5a has substantially flattened shape, and comprises a pair of, preferably metallic, opposite side walls 20. The side walls 20 are connected along their perimeter so as to define inside them a chamber 21 for the passage of the predetermined operating cooling fluid.

More in detail, each heat exchanger 5a comprises opposite horizontal sides 5b and 5c, upper and lower, respectively, and opposite vertical sides, indicated with 5d and 5e, which delimit the aforesaid chamber 21 for the passage of the operating fluid.

Each chamber 21 is in fluid communication with an operating fluid inlet opening 5h of the corresponding heat exchanger 5a through a distributor conduit 5i arranged at the lower horizontal side 5c. The chamber 21 is also in fluid communication with an outlet opening 5f of the corresponding heat-exchanger 5a through a collector conduit 51 placed on the opposite upper horizontal side 5b.

The exchangers 5a are therefore in fluid communication with the outside of the reactor 1, by means of appropriate recirculation and discharge conduits, 8 and 9 respectively. Conduits 8 and 9 are connected to said inlet 5h and outlet 5f openings, respectively, as will be described more in detail below.

In particular, the recirculation conduit 8 is connected to a collector-distributor 18, which is in turn connected through respective connection conduits 28 to the aforesaid inlet openings 5h, such to obtain a fluid communication between the recirculation conduit 8 and the chamber 21 of the exchangers 5a.

Analogously, the outlet openings 5f of the exchangers 5a are connected through respective connection conduits 29 to a collector-distributor 19, which is in turn connected to said discharge conduit 9, such to obtain a fluid communication between the discharge conduit 9 and the chamber 21 of the exchangers 5a.

The recirculation conduit 8 and the discharge conduit 9 are in turn connected to a steam drum, indicated in its entirety with 10, placed outside the reactor 1. In particular, the recirculation conduit 8 is connected to the steam drum in -a lower position of the same, while the discharge conduit 9 is connected at an upper portion of the steam drum 10. A fluid communication between the chamber 21 of the exchangers 5a and the steam drum 10 is thus obtained through the recirculation and discharge conduits 8, 9.

In accordance with the present invention, an additional feed conduit 7 is provided, which is in fluid communication with the chamber 21 of the heat exchangers 5a through a first portion 7a of the same connected to said recirculation conduit 8.

With reference to the example of figure 1, the feeding conduit 7 is also in fluid communication with the steam drum 10, through a second portion 7b of the same, directly connected to the steam drum 10.

In accordance with the method according to the present invention, a flow of reagents is fed into the reactor 1 through the reagent inlet opening 3a.

Such reagent flow runs towards the lower bottom 4 of the reactor 1, parallel to the axis X-X, crossing the catalytic bed 6 in which it exothermically reacts with the formation of reaction products.

Such reaction products, for example ammonia or methanol, then leave the reactor 1 through the product outlet opening 4a, provided at the aforesaid lower bottom 4.

For the cooling of the catalytic bed 6, a flow of recirculation water coming from the steam drum 10 is sent into the heat exchangers 5a.

In particular, the recirculation water flow is fed to the aforesaid inlet openings 5h along a path external to the heat exchangers 5a.

With reference to the examples illustrated in the figures, such external path is obtained by means of the recirculation conduit 8, the collector-distributor 18 and the connection conduits 28 and is therefore comprised between the steam drum 10 and the inlet openings 5h.

Then, the recirculation water flow crosses the plurality 5 of exchangers along an inner path which extends, for each heat exchanger 5a, between the aforesaid inlet opening 5h and the outlet opening 5f.

In the not limiting example illustrated in figure 1, the recirculation water flows in counter-current with respect to the flow of reagents within the catalytic bed 6, absorbing heat.

In other words, the water which flows inside the heat exchangers 5a absorbs, through the walls of the same exchangers, the reaction heat developed by the exothermic reaction in the catalytic bed 6 and undergoes, following such heat absorption, a partial change of state with the generation of steam.

At the outlet of the heat exchangers 5a, a flow of boiling water and steam is therefore sent, by means of the connection conduits 29, the collector-distributor 19 and the discharge conduit 9, to the steam drum 10, where the steam is then removed by means of a steam outlet conduit 11.

The boiling recirculation water, on the other hand, is resent to the heat exchangers 5a by means of the aforesaid external path obtained with the circulation conduit 8, collector-distributor 18 and connection conduits 28.

An additional flow of water is also fed through the conduit 7 in order to reintegrate the portion of operating fluid (water) removed as steam through the steam outlet conduit 11. In accordance with the invention, at least one part of such additional water flow is advantageously mixed, through the aforesaid first portion 7a of the conduit 7, with the recirculation water flowing along the abovementioned external path, and thus with the boiling recirculation water which leaves the steam drum 10 and therefore is free of steam.

Preferably, such at least one part is comprised between 5 and 20 vol%, for example 10 vol%, based on the entire volume of said additional water flow.

Still in accordance with the invention, such at least one part of the additional water flow is mixed with the recirculation water flowing along the aforesaid external path at a temperature lower with respect to the temperature of the same (boiling) recirculation water exiting from the steam drum 10, and preferably is at a greater pressure.

Advantageously, therefore, the operating fluid (water in the present case) fed to the chamber 21 of the exchangers 5a has a lower temperature with respect to the temperature of the recirculation water directly exiting the steam drum 10.

According to the not limiting example illustrated in figure 1, the -mixing between the recirculation water and the additional water flow occurs in the recirculation conduit 8, at the entry of the first portion 7a of the conduit 7 in such conduit 8, which is arranged in the example in proximity with the inlet 5h of the exchanger 5a.

The possible remaining part of the additional water flow is instead conventionally sent to the steam drum 10. In particular, with reference to figure 1, such remaining part of the additional water flow is directly fed to the steam drum 10 by means of the aforesaid second portion 7b of the feed conduit 7.

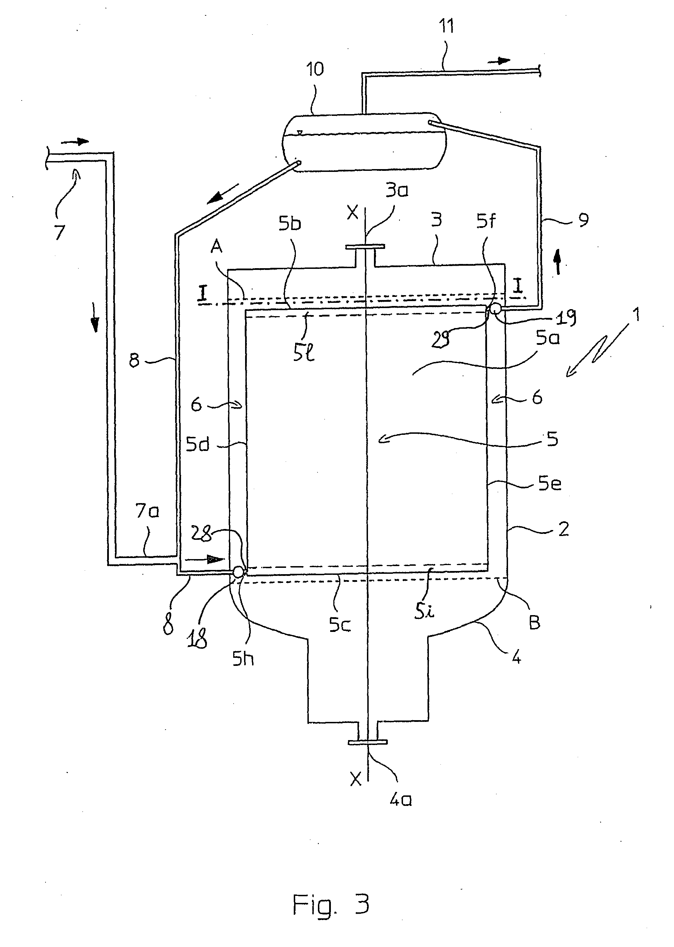

In accordance with an alternative embodiment of the invention, schematically illustrated in figure 3, the additional water flow for the reintegration of the operating fluid (water) removed as steam is entirely mixed with the recirculation water exiting from the steam drum 10.

In this case, the feed conduit 7 does not comprise the second portion 7b for its direct connection with the steam drum 10, and is solely composed of the first portion 7a. Thus, the entire additional water flow is mixed with the recirculation fluid flowing along the aforesaid external path between the steam drum 10 and the inlet opening 5h of the heat exchangers 5a.

Advantageously, the present method permits achieving, inside the heat exchangers 5a, a temperature of the cooling operating fluid, which is considerably lower than the temperature of the boiling water.

Thus, in particular in its lower portion, the reactor operates at a temperature which is lower than the boiling temperature of water, which advantageously can still be varied as desired within certain limits.

The upper portion of the reactor, on the other hand, operates at a temperature greater than the water boiling temperature.

It is therefore possible, through the method according to the invention, to overcome the drawbacks mentioned above with reference to the prior art.

The main advantage resulting from the present invention lies in the possibility to cool the catalytic bed 6, in particular in proximity with the lower bottom 4 of the reactor 1, and thus in correspondence with the final section of the catalytic bed crossed by the reagent flow.

Such cooling permits improving the conversion of the reagents in products, and thus the production yield, particularly for the reactions limited by the equilibrium, such for example the synthesis reactions of ammonia and methanol.

Still more advantageously, it should be said that,: in the case in which the circulation of the circulation liquid (for example water) from the steam drum occurs by natural circulation, the mixing with the additional liquid (water) flow, which is fed at a higher pressure, permits minimizing the effects of possible pressure drops of the recirculation liquid that can occurs along the its circulation path, both inside and outside the reactor.

A further advantage lies in the structural simplicity with which it is possible to manufacture a reactor for carrying out the method according to the present invention.

Such structural simplicity advantageously permits integrating the present method even in reactors which currently employ prior art methods, by means of simple and economical structural modifications (revamping).

Of course, to the method for controlling the temperature of exothermic reactions described above, a person skilled in the art can bring numerous modifications with the intent of satisfying contingent and specific needs, all however contained within the scope of protection of the invention as defined in the following claims.

## Claims

1. Method for controlling the temperature of an exothermic reaction with simultaneous production of steam by means of the use of heat exchangers (5a) crossed by a recirculation liquid along an inner path extended between an inlet opening (5h) for the recirculation liquid and an outlet opening (5f), said recirculation liquid coming from a steam drum (10) for the separation of said produced steam and being fed to said inlet opening (5h) along a path (8, 18, 28) external to said heat exchangers (5a), said produced steam being reintegrated in the form of an additional liquid flow, **characterized in that** at least one part of said additional liquid flow is mixed with said recirculation liquid flowing along said external path (8, 18, 28).

2. Method according to claim 1, **characterized in that** said liquid is water and that said at least one part of said additional liquid flow is comprised between 5 and 20 vol%, preferably 10 vol%, based on the entire volume of said additional liquid flow. '

3. Method according to claim 1, **characterized in that** all of said additional liquid flow is mixed with said recirculation liquid flowing along said external path (8, 18, 28).

4. Method according to claim 1, **characterized in that** said additional liquid flow has a lower temperature than the temperature of said recirculation liquid coming from said steam drum (10).

5. Method according to any one of the preceding claims, **characterized in that** the mixing between said recirculation liquid and said additional liquid flow occurs just upstream from said inlet opening (5h) for the recirculation liquid.

6. Method according to any one of the preceding claims, **characterized in that** said additional liquid flow is fed at a pressure higher than the pressure of the recirculation liquid.

7. Method according to any one of the preceding claims, **characterized in that** said exothermic reaction is a catalytic reaction.

8. Method according to any one of the preceding claims, **characterized in that** said heat exchangers (5a) are of so-called plate type.

9. Chemical reactor for carrying out exothermic reactions in pseudo-isothermal conditions of the type comprising a cylindrical shell (2), closed at opposite ends by an upper bottom (3) and a lower bottom (4), respectively, a reaction space (6) defined inside said cylindrical shell (2) in which a plurality (5) of heat exchangers (5a) are positioned in fluid communication with a steam drum (10), a path (8, 18, 28) external to said heat exchangers (5a) being defined between said steam drum (10) and an inlet opening (5h) of said exchangers (5a) for the recirculation to said exchangers of a heat exchange operating fluid comprising a boiling liquid, **characterized in that** it further comprises a conduit (7, 7a) connected to said external path (8, 18, 28) for the feeding of an additional liquid flow into said recirculation heat exchange operating fluid.

10. Reactor according to claim 9, **characterized in that** the connection between said conduit (7, 7a) and said external path (8, 18, 28) is positioned just upstream from said inlet opening (5h) of said exchangers (5a).

11. Reactor according to claim 9, **characterized in that** said heat exchangers (5a) are of so-called plate type.
